# EUROPÄISCHE PATENTANMELDUNG

(11) **EP 3 032 415 A1**
(43) Veröffentlichungstag der Anmeldung: **15.06.2016**
(21) Anmeldenummer: 14197719.9
(22) Anmeldetag: 12.12.2014
(51) Int. Cl.: G06F 9/48, G06F 9/50

(54) **Verfahren und Anordnung zur Ausführung eines industriellen Automatisierungsprogramms auf einer Automatisierungskomponente mit mehreren Prozessorkernen**

(71) Anmelder: Siemens Aktiengesellschaft, 80333 München (DE)
(72) Erfinder: Burger, Werner, 92245 Kümmersbruck (DE)

(57) **Zusammenfassung**

Die Erfindung betrifft ein Verfahren zur Ausführung eines industriellen Automatisierungsprogramms (user program) auf einer Automatisierungskomponente mit mehreren Prozessorkernen (Core 0, Core 1), wobei das Automatisierungsprogramm (user program) mit einem modularen Betriebssystem zusammenwirkt. Dabei werden zumindest einige oder alle Module des Betriebssystems und/oder das Automatisierungsprogramm (user program) funktionalen Kategorien (K1, K2, K3) zugeordnet, wobei anhand der jeweils zugeordneten Kategorie (K1, K2, K3) diese Module jeweils einem der Prozessorkerne (Core 0, Core 1) zur Ausführung zugewiesen werden. Dadurch können die Module und die durch die Module abzuarbeitenden Prozesse ("threads") derart auf die verfügbaren Prozessorkerne verteilt, dass eine gegenseitige Beeinflussung (Behinderung) und die damit verbundenen Performance-Nachteile minimiert oder verhindert werden. Dabei ist dieselbe Software auch in unveränderter Form auf anderen Systemen mit abweichender Anzahl an Prozessorkernen ablauffähig, so dass keine spezifischen Varianten erzeugt werden müssen.

## Beschreibung

Die Erfindung betrifft ein Verfahren zur Ausführung eines industriellen Automatisierungsprogramms auf einer Automatisierungskomponente mit mehreren Prozessorkernen gemäß dem Oberbegriff des Patentanspruchs 1, und eine industrielle Automatisierungskomponente mit mehreren Prozessorkernen zur Ausführung eines industriellen Automatisierungsprogramms gemäß dem Oberbegriff des Patentanspruchs 10.

Viele Bereiche der Automatisierung fordern eine immer höhere Leistung, um die Regelgüte der Applikationen zu verbessern. Insbesondere im Bereich von Stromregelung, bei Motion Control oder für hydraulische Pressen werden kürzeste Zyklen bereits heute benötigt. Gleichzeitig gibt es sehr viele einfache Applikationen, bei denen der Preis einer Automatisierungskomponente (Steuerung, PLC - Programmable Logic Controller, oder dgl.) entscheidend ist, jedoch eine durchschnittliche Leistung der Hardware ausreicht. Deshalb bieten die führenden Anbieter eine oder mehrere Produktlinien an, um die verschiedenen Applikationen abzudecken.

Die meisten Bereiche der Automatisierung fordern dabei jedoch eine immer höhere Leistung in Form einer Kombination aus schnelleren Zykluszeiten, mehr gleichzeitig abgearbeiteten Anwenderprogrammen, mehr Durchsatz bei Kommunikation und darüber hinaus Kommunikation gleichzeitig zu mehr Geräten (HMIs, PCs, andere CPUs, IO-Devices). Bedingt durch die vielfältigen Aufgaben einer Steuerung muss diese vielfältige andere Aufgaben lösen, die für die schnelle Applikation (Anwenderprogramme) zu gewissen Sperrzeiten und Unterbrechungszeiten führen. Die Sperrzeiten, die Unterbrechungszeiten sowie die Zeit für die schnelle Applikation selbst addieren sich letztendlich zu einer Gesamtzeit, die die maximal mögliche Frequenz, also die Zykluszeit oder Reaktionsgeschwindigkeit einer Software-basierten Automatisierungslösung, limitiert. Zudem steht ein Performance-Gewinn bei den Anwendungen, also den Automatisierungsprogrammen, oft in Konkurrenz zur Kommunikationsfähigkeit eines solchen Systems, weil die entsprechenden Software-Module ebenfalls Rechenzeit (Prozessorzeit) benötigen. Im Folgenden soll mit den Begriffen "Modul", "Software-Modul" oder "Programmmodul" der zu einem "thread" gehörende Programmcode bezeichnet werden.

Im Stand der Technik kommen für einfache Anwendungen meist Einkern-Prozessoren ("single-core") zum Einsatz, da diese kostengünstiger und kleiner sind und eine geringere Verlustleistung aufweisen. Zwar sind Mehrkernprozessoren ("dualcore", "multi-core") heute bereits ebenfalls in vielen Steuerungen eingesetzt, aber die Software nutzt die angebotenen Möglichkeiten bisher oft nicht oder nur unzureichend aus. Gründe dafür sind einerseits ein notwendiger Paradigmenwechsel in der Softwareerstellung, um die Rechenleistung auf die einzelnen Prozessoren zu verteilen, und andererseits der hohe Aufwand für die Anpassung existierender Software an die neuen Möglichkeiten. Traditionell werden Leistungssteigerungen häufig dadurch erzielt, dass Prozessoren mit höheren Taktfrequenzen verwendet werden, was den Vorteil bietet, dass die Software unverändert weiterverwendet werden kann. Seit einigen Jahren ist allerdings klar, dass bezüglich der Taktfrequenzen der Prozessoren eine Grenze erreicht ist und höhere Leistungen vor allem durch Prozessoren mit mehreren Rechenkernen erreicht werden. Bei der Verwendung bereits bestehender Software auf Systemen mit mehreren Prozessorkernen wird allerdings effektiv oft nur einer der Prozessorkerne ausgenutzt.

Sofern eine Software nicht schon von vorne herein für den Ablauf auf Mehrkern-Prozessoren konfiguriert und compiliert ist, wird die Verteilung der Befehle auf die Prozessoren üblicherweise durch ein Betriebssystem ("multithreading") zur Laufzeit vorgenommen. Dabei ist es bekannt und üblich, für den nächsten rechenbereiten thread der Software den nächsten freiwerdenden Prozessorkern vorzusehen. Das Betriebssystem kann allerdings nur dann zur Laufzeit threads verteilen, wenn entweder ein Programm für Multithreading geschrieben ist, oder wenn es sich um unabhängige Programminstanzen handelt (z.B. Instanzen von Microsoft Word, Excel, Internet Explorer, ...). Dadurch ergibt sich insgesamt eine höhere Performance, als es bei der Verwendung nur eines Prozessorkerns der Fall wäre.

Es hat sich jedoch herausgestellt, dass mit dem bekannten "multithreading" zur Laufzeit zwar die Gesamtleistung eines Systems verbessert werden kann, aber eine optimale Verteilung der einzelnen "threads" auf die verfügbaren Prozessorkerne bereits bei der Compilierung berücksichtigt werden muss, d.h., dass der Programmcode für die konkret verwendete Ziel-plattform (Steuerung, SPS, Automatisierungskomponente) optimiert werden muss. Das heißt, dass zur Optimierung der Software für verschiedene Hardware-Plattformen, insbesondere mit unterschiedlicher Anzahl an Prozessoren oder Prozessor-Kernen, im Stand der Technik für jede Art von Ziel-Plattformen eine eigene, optimierte Software erstellt werden muss, was die Entwicklungskosten negativ beeinflusst und Software erzeugt, die nicht immer kompatibel zu allen Plattformen einer Hardware-"Familie" ist.

Es ist daher eine Aufgabe der vorliegenden Erfindung, die Ausführung von Programmcode für unterschiedliche Ziel-Hardware, insbesondere im Hinblick auf unterschiedliche Prozessoren mit mehreren Prozessorkernen, in flexibler Weise zu optimieren.

Es ist eine Kernidee der Lösung dieser Aufgabe, die vielen Aufgaben und die damit verbundenen "threads", die eine Steuerung zu erledigen hat, verteilbar zu machen, ohne für jede Ziel-Plattform eine separate Variante der Software zu benötigen. Es werden also "threads" bzw. die damit verbundenen Aufgaben verteilt, und diese verteilten Aufgaben können sogar denselben Programmcode nutzen. Die Aufgaben sind dabei auf die jeweils zugegriffenen Daten bezogen bzw. werden nach diesem Kriterium kategorisiert und auf die Prozessorkerne verteilt, und nicht unbedingt oder nicht nur anhand des konkret verwendeten Programmcodes den Kategorien und damit den Prozessorkernen zugeordnet. Dadurch wird zu vergleichsweise günstigen Entwicklungskosten eine deutlich bessere Skalierbarkeit einer Produktlinie erreicht, von sehr kostengünstig ausgelegten Produkten bis hin zu sehr leistungsfähig ausgelegten Produkten. Dabei werden erfindungsgemäß die vielen Aufgaben bzw. die diesen zugeordneten Programm-Module, die eine Steuerung abarbeiten soll, verteilbar gestaltet und flexibel so auf Rechenkerne verteilt, dass sie gleichzeitig und ohne gegenseitige Beeinflussung erledigt werden. Dazu werden erfindungsgemäß Thread-Gruppen gebildet, die auf unterschiedlichen, jedoch jeweils festgelegten "Cores" ausgeführt werden, je nachdem, wie viele "Cores" verfügbar sind. Beispielsweise können alle Aufgaben und damit Module bzw. threads, die auf Anwenderdaten zugreifen, auf demselben "Core" ablaufen, während Routinen für Timer und andere Interrupt-gesteuerte Prozesse auf einem anderen "Core" laufen; gleiches gilt für die "Hardware-nahen" Echtzeit-Komponenten der Kommunikationsprozesse. Anhand der Art der Aufgabe der einzelnen Module, Prozesse bzw. threads, die zur Erledigung der jeweiligen Aufgaben verwendet werden, wird damit festgelegt, wie bzw. "wo" diese im Einzelnen abgearbeitet werden. Dadurch wird die Gesamtleistungsfähigkeit einer Steuerung vervielfacht, je nach Anzahl der Rechenkerne. Zudem lässt sich durch die Erfindung gleichzeitig sowohl das Kommunikationsverhalten, als auch die Reaktionsfähigkeit (Zykluszeit) der Automatisierungsaufgaben optimieren.

Die Aufgabe wird insbesondere durch das erfindungsgemäße Verfahren gemäß Patentanspruch 1 und die erfindungsgemäße Automatisierungskomponente gemäß Patentanspruch 10 gelöst.

Dabei wird ein Verfahren zur Ausführung eines industriellen Automatisierungsprogramms auf einer Automatisierungskomponente mit mehreren Prozessorkernen vorgeschlagen, bei dem das Automatisierungsprogramm mit einem modularen Betriebssystem zusammenwirkt. Dabei werden zumindest einige oder alle Module bzw. Aufgaben oder threads des Betriebssystems funktionalen Kategorien zugeordnet, wobei anhand der jeweils zugeordneten Kategorie diese Module jeweils einem der Prozessorkerne zur Ausführung zugewiesen werden. Dadurch können die Module und die durch die Module abzuarbeitenden Prozesse ("threads") derart auf die verfügbaren Prozessorkerne verteilt werden, dass eine gegenseitige Beeinflussung (Behinderung) und die damit verbundenen Performance-Nachteile minimiert oder verhindert werden; im Idealfall haben wichtige Module / threads sogar einen "eigenen" Prozessorkern zur Verfügung. Dabei ist dieselbe Software auch in unveränderter Form auf anderen Systemen mit abweichender Anzahl an Prozessorkernen ablauffähig, so dass keine spezifischen Varianten erzeugt werden müssen.

Außerdem wird zur Lösung der Aufgabe eine industrielle Automatisierungskomponente mit mehreren Prozessorkernen zur Ausführung eines industriellen Automatisierungsprogramms vorgeschlagen, die mit einem modularen Betriebssystem zum Ablauf des Automatisierungsprogramms ausgestattet ist. Dabei sind zumindest einige oder alle Module des Betriebssystems und/oder einer Firmware funktionalen Kategorien zugeordnet, wobei die Automatisierungskomponente zur Zuweisung der Module zur Ausführung mittels jeweils einem der Prozessorkerne anhand der jeweils zugeordneten Kategorie dieser Module eingerichtet ist. Mit einer solchen Automatisierungskomponente können die anhand des Verfahrens diskutierten Vorteile realisiert werden.

Vorteilhafte Ausgestaltungen des erfindungsgemäßen Verfahrens sind in den abhängigen Patentansprüchen angegeben. Die dabei angegebenen Merkmale und Vorteile sind sowohl einzeln, als auch in Kombination realisierbar und gelten sinngemäß auch für die erfindungsgemäße Automatisierungskomponente.

Vorteilhaft ist auch das Automatisierungsprogramm modular aufgebaut, wobei zumindest einige der Module des Automatisierungsprogramms den funktionalen Kategorien zugeordnet werden. dadurch können die Module des Automatisierungsprogramms in die erfindungsgemäße Zuweisung und damit Optimierung einbezogen werden.

In einer vorteilhaften Ausführungsform wird die Zuordnung der Module zu den funktionalen Kategorien während eines Engineerings einer industriellen Automatisierungsanordnung durchgeführt, wobei der Automatisierungskomponente durch das Engineeringsystem Informationen über die jeweils zugeordneten Kategorien der durch die Automatisierungskomponente auszuführenden Module bereitgestellt werden. Diese Informationen können entweder direkt an die jeweiligen Module (compilierte Programmabschnitte) gebunden bzw. gespeichert werden, oder in einer separaten Datei, Tabelle oder dgl. bereitgestellt werden.

Vorteilhaft erfolgt die Zuweisung der Module zu den Prozessorkernen der Automatisierungskomponente beim Start oder zur Ausführungszeit des Automatisierungsprogramms durch eine Firmware der Automatisierungskomponente und damit erst seitens der Automatisierungskomponente, so dass die Zuordnung flexibel anhand der jeweils lokal festgestellten Hardware, insbesondere in Bezug auf die verfügbaren Prozessorkerne, erfolgen kann.

Bezüglich der Kategorien wird vorteilhaft zumindest zwischen Modulen für die Kommunikation, Modulen für das Anwendungsprogramm und Interrupt-gesteuerten Modulen des Betriebssystems unterschieden, weil diese oft in direkter Ausführungskonkurrenz zueinander stehen. Eine Verteilung dieser Modul-Kategorien auf verschiedene Prozessorkerne hilft daher dabei, ein besonders hohes Optimierungspotential zu realisieren. Vorteilhaft werden durch eine Firmware der Automatisierungskomponente die Module für die Kommunikation und die Module für das Anwendungsprogramm zur Ausführung auf verschiedenen der verfügbaren Prozessorkerne zugwiesen, so dass Betriebssystem und Anwenderprogramm weitgehend dem Stand der Technik entsprechen können. Das heißt, dass eine einmal erstellte Anwendung unverändert auf Single- und Multiprozessorsystemen ablaufen kann, so dass sich eine Erstellung verschiedener Software-Varianten meist erübrigt, und wobei im Falle der Ausführung mittels einer Multiprozessor- oder Multikern-Architektur die verfügbaren Prozessorkerne vorteilhaft ausgenutzt werden.

Für zumindest eine der funktionalen Kategorien werden in einer vorteilhaften Variante der Erfindung zumindest zwei Sub-Kategorien vorgesehen, wobei die Subkategorien Module (Aufgaben, threads) mit unterschiedlicher Ausführungspriorität betreffen können, und wobei die Module der Sub-Kategorien mit unterschiedlichen Ausführungsprioritäten unterschiedlichen Prozessorkernen zur Ausführung zugewiesen werden. Dadurch kann die Zuweisung der Module zu den Prozessorkernen präziser vorgenommen werden.

In einer weiteren Variante kann zwischen zumindest zwei Optimierungszielen ausgewählt werden, wobei durch die Firmware der Automatisierungskomponente die Zuweisung der Module zu den Prozessorkernen durch das jeweils gewählte Optimierungsziel beeinflusst wird. Das gibt einem Benutzer Einfluss auf das konkrete Verhalten, wenn nötig sogar erst zur Laufzeit. Dabei kann beispielsweise bei den Optimierungszielen zumindest zwischen hohem "Durchsatz" (Datendurchsatz) für die Kommunikation und kurzen Reaktionszeiten oder kurzen Ausführungszyklen des Automatisierungsprogramms gewählt werden.

Ausführungsbeispiele des erfindungsgemäßen Verfahrens und damit auch der erfindungsgemäßen Automatisierungskomponente werden nachfolgend anhand der Zeichnungen erläutert.

Dabei zeigen:
- Figur 1: in schematischer Darstellung die Zuordnung von Modulen einer Software zu zwei Prozessorkernen gemäß einer ersten Optimierungsstrategie,
- Figur 2: die Zuweisung der Module gemäß einer zweiten Optimierungsstrategie, und
- Figur 3: die Zuweisung der Module zu den Prozessorkernen gemäß einer dritten Optimierungsstrategie.

In den Figuren sind Module einer Software für eine industrielle Automatisierungskomponente in Gruppen zusammengefasst und als jeweils quadratische Blöcke bzw. "Multiblöcke" dargestellt, wobei die Module exemplarisch mit Namen wie "user program", "communication applications" (kurz "comm. applications"), "time critical communication subsystems" und dergleichen gekennzeichnet sind, die an die Funktion des jeweiligen Moduls angelehnt sind. Im Ausführungsbeispiel wird dabei schematisch die Zuweisung der Module zu zwei Prozessorkernen Core 0, Core 1 der Automatisierungskomponente gezeigt. Dabei handelt es sich um eine vereinfachte Darstellung, wobei in einer realen Anordnung weitere Prozessorkerne und auch weitere Sub-Prozessoren, Co-Prozessoren und dergleichen eingesetzt werden können. So können beispielsweise hardwarenahe Prozesse wie "wall clock subsystems" oder die Behandlung von Kommunikationsprotokollen in den unteren Schichten der Kommunikation gemäß ISO/OSI Schichtenmodell auf solche Sub-Prozessoren ausgelagert sein, wogegen sie in der hier vereinfachten Darstellung einem der Prozessorkerne zugewiesen sind.

Die Module, die sowohl dem Anwendungsprogramm (user program), dem Betriebssystem als auch der Firmware der Automatisierungskomponente entstammen können, sind in drei Kategorien K1, K2, K3 (Haupt-Kategorien) eingeteilt, wobei diese Hauptkategorien K1, K2, K3 beliebige Subkategorien aufweisen können. Während die Hauptkategorien K1, K2, K3 in diesem Ausführungsbeispiel funktional gegliedert sind, indem beispielsweise der Kategorie K1 die Module des Anwendungsprogramms ("user program") zugeordnet sind, während die Kategorie K2 hauptsächlich Kommunikations-Programmmodule (z.B. Webserver, Dateisysteme etc.) aufweist, und wobei in der Kategorie K3 Hardware-nahe Module wie sogenannte "timer", Interrupt-Serviceroutinen etc. zugeordnet sind. Die Sub-Kategorien, die den Haupt-Kategorien K1, K2, K3 untergeordnet sind, sind in den Figuren nicht separat dargestellt. Im Beispiel der Kategorie K1 betreffen die Sub-Kategorien unterschiedliche Prioritäten in der Ausführung der jeweiligen Programm-Module, während in anderen Kategorien K2, K3 die Sub-Kategorien auch funktional oder nach anderen Kriterien gegliedert sein können. Die den Kategorien und Sub-Kategorien inhärenten Eigenschaften haben jedenfalls direkten Einfluß auf die später diskutierte Zuweisung der Software-Module zu den Prozessorkernen.

Die Zuordnung der Module zu den einzelnen Kategorien K1, K2, K3 und ggfs. Sub-Kategorien hat in diesem Ausführungsbeispiel bereits in einem Engineering-System stattgefunden, mit dem die Software geplant oder programmiert wurde. Zwar kann die Zuordnung der Module zu den Kategorien dabei manuell durchgeführt werden, es ist aber auch möglich, mit einem Engineering-System Regeln zu programmieren anhand derer die Zuordnung automatisch oder zumindest teil-automatisch geschieht. Dies ist insbesondere für hardware-nahe Module, Systemdienste, Kommunikations-Module etc. möglich, die zumeist ohnehin seitens des Herstellers bereitgestellt werden und deren Aufgabe oder deren Art des Speicherzugriffs etc. bereits bekannt sind. Die Zuordnung der Module zur jeweiligen Kategorie kann in der compilierten Software mittels Steuerzeichen ("flags") oder dergleichen dokumentiert werden; es ist auch möglich, eine Tabelle oder Datei oder dergleichen separat zur Verfügung zu stellen, womit diese Zuordnung dokumentiert ist. In einer besonderen Ausführungsform kann die Zuordnung der Module zu den Kategorien auch automatisch durch die Firmware der Automatisierungskomponente erfolgen, also "lokal" und "online".

In einer einfachen Ausführungsform der Erfindung erfolgt die automatische Zuweisung der Module, die bereits in Kategorien zusammengefasst sind, zu den Prozessor-Kernen Core 0, Core 1 gemäß einer allgemein vorgegebenen Optimierungs-Strategie automatisch mittels der Firmware der Automatisierungskomponente, wobei diese Zuweisung entweder statisch vor dem Start der Anwendung, beispielsweise des Automatisierungsprogramms, derart festgelegt werden kann, dass sich eine ausgewogene Optimierung sowohl der Ausführungszeit (Zykluszeit, Reaktionszeit) des Anwendungsprogramms, als auch der Kommunikations-Programm-Module und anderer Module ergibt. Insbesondere in den Fällen, in denen zur Laufzeit des Automatisierungsprogramms Module der Software aktiviert oder deaktiviert werden, kann diese Zuweisung auch im laufenden Betrieb geändert werden, also "dynamisch" erfolgen. Außerdem ist es möglich, dass ein Anwender oder ein dazu eingerichtetes Programm situationsabhängig eine Optimierungs-Strategie vorgibt, beispielsweise zur Optimierung der Zykluszeit eines Anwendungsprogramms oder zur Beschleunigung des "Durchsatzes" der Kommunikationseinrichtungen.

Im Folgenden werden anhand der Figuren drei verschiedene Optimierungs-Strategien diskutiert.

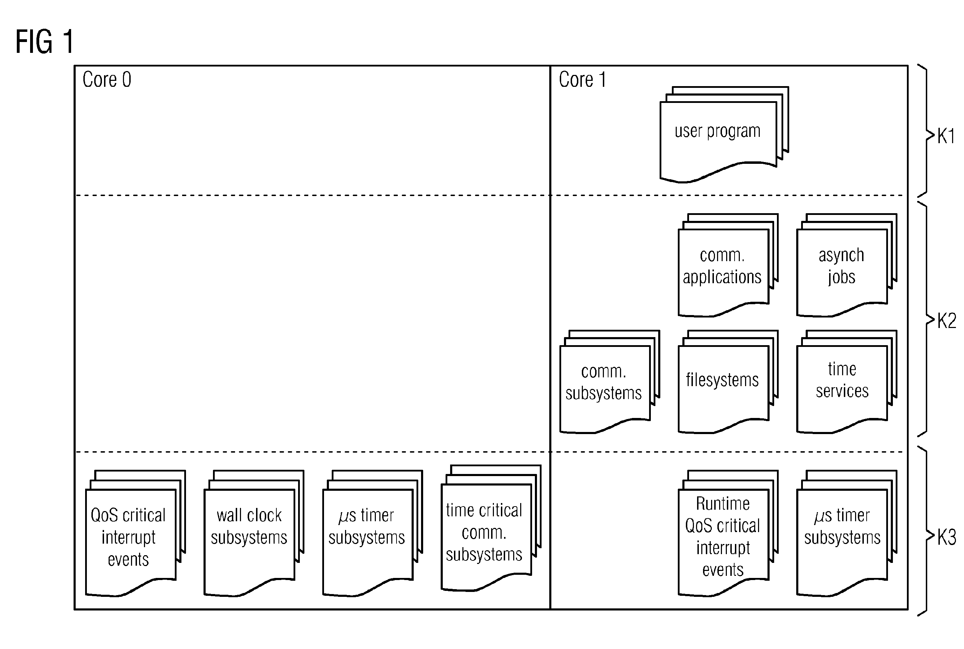

In der Figur 1 ist der Fall dargestellt, in welchem die Zykluszeit bzw. Reaktionszeit, auch "Klemme-zu-Klemme-Reaktionszeit" genannt, optimiert werden soll. Dabei ist zu sehen, dass sowohl das Anwendungsprogramm, dessen Zykluszeit und damit Ausführungszeit primär die Reaktionszeit der Automatisierungsanordnung definiert, als auch eine Vielzahl der Kommunikationsroutinen in der Kategorie K2, demselben Prozessorkern Core 1 zugeordnet sind. Alle hoch-prioren Prozesse und Interrupt-Serviceroutinen, die Verzögerungen für gleichzeitig ablaufende andere hoch-priore, hochfrequente oder kritische Anwendungen bringen würden, sind dagegen dem Prozessorkern Core 0 zugeordnet. Der Grund dafür, dass trotz des Design-Ziels einer schnellen Reaktionszeit des Anwendungsprogramms, also der Module der Kategorie K1, die meisten Module der Kategorie K2 ebenfalls dem Prozesskern Core 1 zugeordnet sind, liegt daran, dass ein Anwendungsprogramm oft auf das Dateisystem (file system) und andere gemeinsam mit den Kommunikationsroutinen genutzten Ressourcen zugreifen muss. Dies lässt sich besser innerhalb einer einzelnen Ausführungsstruktur, also mittels der Verarbeitung durch einen einzigen Prozessorkern, synchronisieren. Dagegen ist eine Vielzahl der Module aus der Kategorie K3 in ihrem Ablauf ohnehin unabhängig zu den Modulen der Kategorien K1 und K2, so dass es sich für die hier angestrebte Optimierung anbietet, diese Module einem anderen Prozessorkern Core 0 zuzuordnen.

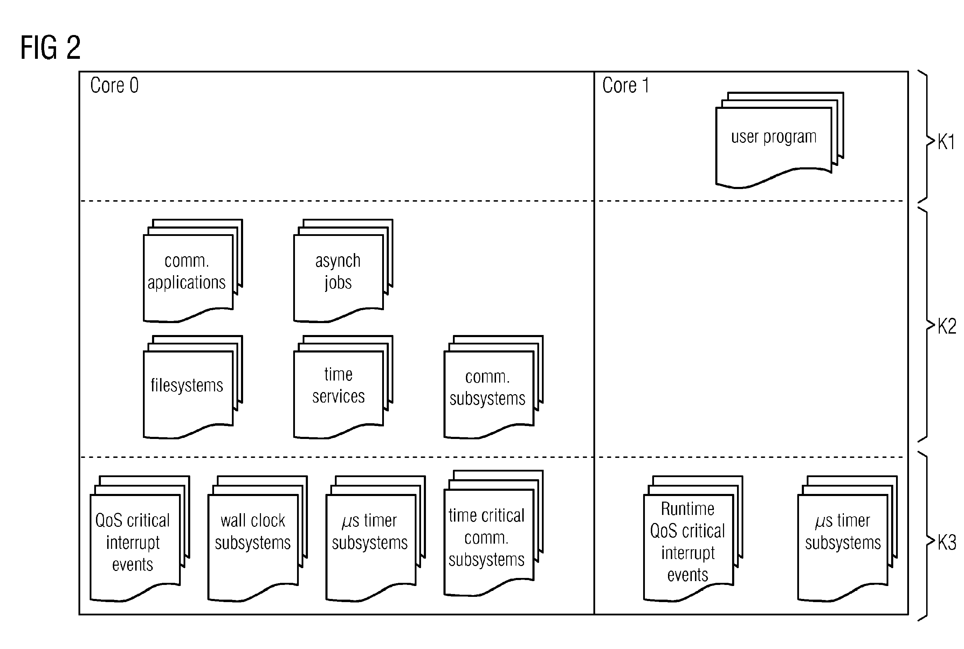

Die in der Figur 2 angewendete Optimierungs-Strategie ist hingegen hinsichtlich möglichst hohem Datendurchsatz oder alternativ schneller Antwortzeiten der Kommunikationsroutinen bzw. Module zur Abwicklung der Kommunikation ausgerichtet. Aus diesem Grund sind die Module der Kategorie K2 einem anderen Prozessorkern Core 0 zugewiesen, als die Module der Kategorie K1. Die Vorteile können hier jedoch nur dann realisiert werden, wenn die anhand der Figur 1 diskutierten wechselweisen Zugriffe der Kommunikations-Module und der Anwenderprogramm-Module auf gemeinsam genutzte Ressourcen nur in geringem Maße notwendig sind. Anderenfalls wäre die hier gezeigte Zuweisung auch für die Belange der Kommunikations-Module unvorteilhaft.

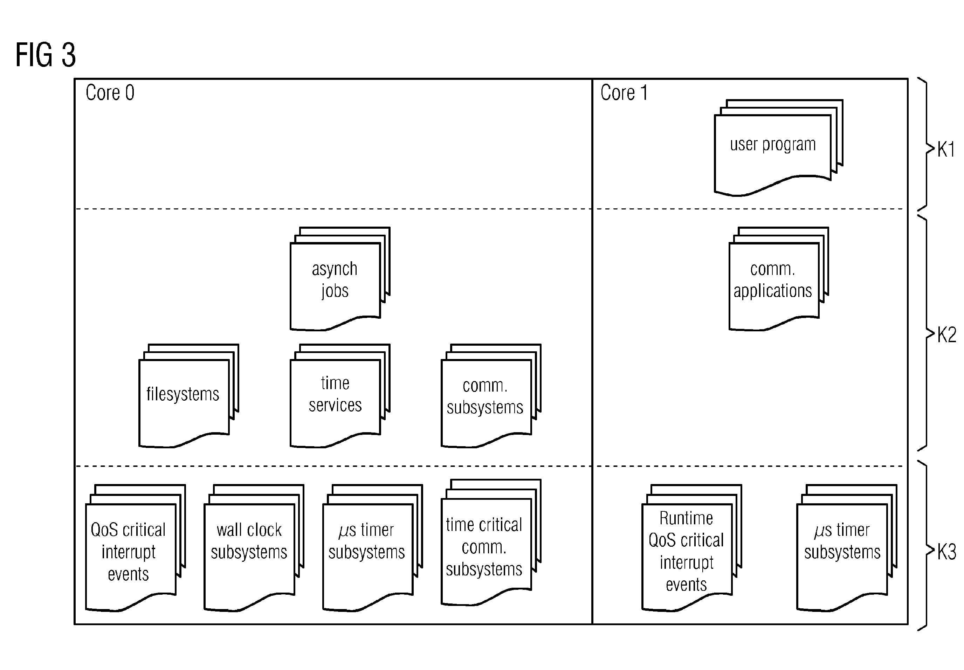

Die Figur 3 zeigt als weiteres Ausführungsbeispiel eine bezüglich der Leistungsfähigkeit (Performance) ausgewogene Optimierung sowohl hinsichtlich der Reaktionszeit der Anwendungsprogramme, als auch der Datendurchsatz der Kommunikations-Module. Für jeden Prozessorkern sind Module (threads) mit ähnlichem Laufzeitverhalten und ähnlicher Ausführungspriorität zugewiesen. Nahezu alle Firmware-Module, die vorwiegend in der Kategorie K3 angeordnet sind, werden ähnlich zu einem Single-Prozessor-System einem einzigen Prozessorkern Core 0 zugewiesen, was hier den Vorteil bietet, dass die Module der Firmware nicht kategorisiert und nicht "gesplittet" werden müssen. Der wesentliche Vorteil ist weiterhin, dass sie für die Module der Kategorien K1 und K3 auf dem Prozessorkern Core 1 nicht als Störfaktor wirken und so sehr schnelle Reaktionszeiten ermöglichen. Für viele Anwendungen ist eine Zuweisung, ähnlich zu der in der Figur 3, nach dieser Ausführungsstrategie vorteilhaft und kann daher als Standard-Strategie ("default") vorgegeben werden.

Während im vorstehenden Ausführungsbeispiel stets zwischen Modulen eines Betriebssystems und einer sogenannten "Firmware" unterschieden wurde, können alle diese Module und Funktionalitäten auch unter dem Oberbegriff "Betriebssystem" oder alternativ auch unter dem Oberbegriff "Firmware" subsumiert werden. Darüber hinaus ist die vorstehend beschriebene Einteilung von Modulen in Kategorien und die Zuweisung der Module der einzelnen Kategorien zu Prozessorkernen unabhängig davon, ob die einzelnen Module einem Anwendungsprogramm (user program) einem Betriebssystem oder einer Firmware entstammen.

## Patentansprüche

1. Verfahren zur Ausführung eines industriellen Automatisierungsprogramms (user program) auf einer Automatisierungskomponente mit mehreren Prozessorkernen (Core 0, Core 1),
wobei das Automatisierungsprogramm (user program) mit einem modularen Betriebssystem zusammenwirkt,
**dadurch gekennzeichnet,**
**dass** zumindest einige oder alle Module des Betriebssystems funktionalen Kategorien (K1, K2, K3) zugeordnet werden, und dass anhand der jeweils zugeordneten Kategorie (K1, K2, K3) diese Module jeweils einem der Prozessorkerne (Core 0, Core 1) zur Ausführung zugewiesen werden.

2. Verfahren nach Patentanspruch 1,
**dadurch gekennzeichnet,**
**dass** das Automatisierungsprogramm (user program) modular aufgebaut ist, wobei zumindest einige der Module des Automatisierungsprogramms (user program) den funktionalen Kategorien (K1, K2, K3) zugeordnet werden.

3. Verfahren nach einem der vorhergehenden Patentansprüche,
**dadurch gekennzeichnet,**
**dass** die Zuordnung der Module zu den funktionalen Kategorien (K1, K2, K3) während eines Engineerings einer industriellen Automatisierungsanordnung durchgeführt wird, wobei der Automatisierungskomponente durch das Engineeringsystem Informationen über die jeweils zugeordneten Kategorien (K1, K2, K3) der durch die Automatisierungskomponente auszuführenden Module bereitgestellt werden.

4. Verfahren nach einem der vorhergehenden Patentansprüche,
**dadurch gekennzeichnet,**
**dass** die Zuweisung der Module zu den Prozessorkernen (Core 0, Core 1) der Automatisierungskomponente beim Start oder zur Ausführungszeit des Automatisierungsprogramms (user program) durch eine Firmware der Automatisierungskomponente erfolgt.

5. Verfahren nach einem der vorhergehenden Patentansprüche,
**dadurch gekennzeichnet,**
**dass** bezüglich der Kategorien (K1, K2, K3) zumindest zwischen Modulen für die Kommunikation, Modulen für das Anwendungsprogramm und interruptgesteuerten Modulen des Betriebssystems unterschieden wird.

6. Verfahren nach Patentanspruch 5,
**dadurch gekennzeichnet,**
**dass** durch eine Firmware der Automatisierungskomponente die Module für die Kommunikation und die Module für das Anwendungsprogramm zur Ausführung auf verschiedenen der verfügbaren Prozessorkerne (Core 0, Core 1) zugewiesen werden.

7. Verfahren nach einem der vorhergehenden Patentansprüche,
**dadurch gekennzeichnet,**
**dass** für zumindest eine der funktionalen Kategorien (K1, K2, K3) zumindest zwei Sub-Kategorien vorgesehen werden, wobei die Subkategorien Module mit unterschiedlicher Ausführungspriorität betreffen, und
wobei die Module der Sub-Kategorien mit unterschiedlichen Ausführungsprioritäten unterschiedlichen Prozessorkernen (Core 0, Core 1) zur Ausführung zugwiesen werden.

8. Verfahren nach einem der vorhergehenden Patentansprüche,
**dadurch gekennzeichnet,**
**dass** zwischen zumindest zwei Optimierungszielen ausgewählt werden kann,
wobei durch die Firmware der Automatisierungskomponente die Zuweisung der Module zu den Prozessorkernen (Core 0, Core 1) durch das jeweils gewählte Optimierungsziel beeinflusst wird.

9. Verfahren nach Patentanspruch 8,
**dadurch gekennzeichnet,**
**dass** bei den Optimierungszielen zumindest zwischen hohem Datendurchsatz für die Kommunikation und kurzen Reaktionszeiten oder kurzen Ausführungszyklen des Automatisierungsprogramms (user program) gewählt wird.

10. Industrielle Automatisierungskomponente mit mehreren Prozessorkernen (Core 0, Core 1) zur Ausführung eines industriellen Automatisierungsprogramms (user program),
mit einem modularen Betriebssystem zum Ablauf des Automatisierungsprogramms (user program),
**dadurch gekennzeichnet,**
**dass** zumindest einige oder alle Module des Betriebssystems funktionalen Kategorien (K1, K2, K3) zugeordnet sind, und dass die Automatisierungskomponente zur Zuweisung der Module zur Ausführung mittels jeweils einem der Prozessorkerne (Core 0, Core 1) anhand der jeweils zugeordneten Kategorie (K1, K2, K3) dieser Module eingerichtet ist.

11. Industrielle Automatisierungskomponente nach Patentanspruch 10,
**dadurch gekennzeichnet,**
**dass** die industrielle Automatisierungskomponente zur Zuweisung der Module zu einem der Prozessorkerne (Core 0, Core 1) gemäß einem Verfahren der Patentansprüche 4 bis 9 eingerichtet ist.
